Europäisches Patentamt

(19) European Patent Office

Office européen des brevets

(11) Numéro de publication: **0 093 626**
**B1**

(12) **FASCICULE DE BREVET EUROPÉEN**

(45) Date de publication du fascicule du brevet:
**15.10.86**

(21) Numéro de dépôt: **83400617.3**

(22) Date de dépôt: **24.03.83**

(51) Int. Cl.⁴: **F 16 B  15/00**

(54) **Agrafe universelle.**

(30) Priorité: **29.04.82  FR 8207414**

(43) Date de publication de la demande:
**09.11.83 Bulletin 83/45**

(45) Mention de la délivrance du brevet:
**15.10.86 Bulletin 86/42**

(84) Etats contractants désignés:
**AT BE CH DE GB IT LI LU NL SE**

(56) Documents cité:
**FR-A-2 318 715**

(73) Titulaire: **Cassese, Antoine, Les Essarts No 7
Saint Germain Laxis, F-77950 Maincy (FR)**

(72) Inventeur: **Cassese, Antoine, Les Essarts No 7
Saint Germain Laxis, F-77950 Maincy (FR)**

(74) Mandataire: **Lepeudry- Gautherat, Thérèse,
Armengaud Jeune Cabinet Lepeudry 23
boulevard de Strasbourg, F-75010 Paris (FR)**

## Description

La présente invention est relative à une agrafe universelle qui peut être notamment utilisée pour l'agrafage des cadres de bois tels que ceux qui entourent les tableaux.

Par FR-A-2 318 715 il est en particulier connu une agrafe qui consiste en une lamelle métallique pliée en deux au voisinage de sa partie médiane dont l'un des bords horizontaux presente une partie biseautée formée à partir de la face intérieure de l'agrafe. Une telle agrafe peut également comporter des bords verticaux qui sont repliés extérieurement en direction de l'axe de pliage. En outre, une protubérance telle qu'un renflement ou deux lèvres d'une saignée, peut s'étendre sur la largeur de l'agrafe.

On peut également utiliser des agrafes qui consistent en des éléments métalliques plats formant un angle dans leur plan et munis de dents saillantes perpendiculairement.

Ces agrafes de l'art antérieur sont destinées à l'agrafage de baguettes pour réaliser des cadres en bois. Mais dans le cas où l'on désire agrafer des baguettes en un bois très dur tel que par exemple le chêne européen et le chêne américain, de telles agrafes ne conviennent nullement, car elles se déforment et même se déchirent.

Aussi, un but de la présente invention est-il de fournir une agrafe qui pénètre dans les bois réputés durs.

Un objet de l'invention est une agrafe de ce type dont la fabrication est simple et de faible coût.

Ce but et cet objet, ainsi que d'autres qui apparaîtront par la suite, sont atteints par une agrafe universelle, selon la présente invention, qui consiste notamment en une lamelle métallique pliée en deux au voisinage de sa partie médiane dont le bord horizontal qui entre le premier dans le matériau présente un biseau, caractérisée en ce que ledit bord comporte une partie plane qui s'étend entre 1/6e et 17/30e de l'épaisseur de l'agrafe, prolongée par une partie oblique faisant un angle par rapport à la verticale compris entre 11 et 16 degrés.

Selon un mode de réalisation préféré de l'invention, l'agrafe comporte une partie plane s'étendant sur la moitié de l'épaisseur de cette agrafe et une partie oblique dont l'angle avec la verticale est de 12 degrés.

La description qui va suivre et qui ne présente aucun caractère limitatif, doit être lue en regard des figures annexées parmi lesquelles.

La figure 1 représente en perspective une agrafe selon la présente invention.

La figure 2 est une coupe verticale selon la ligne II-II de la figure 1.

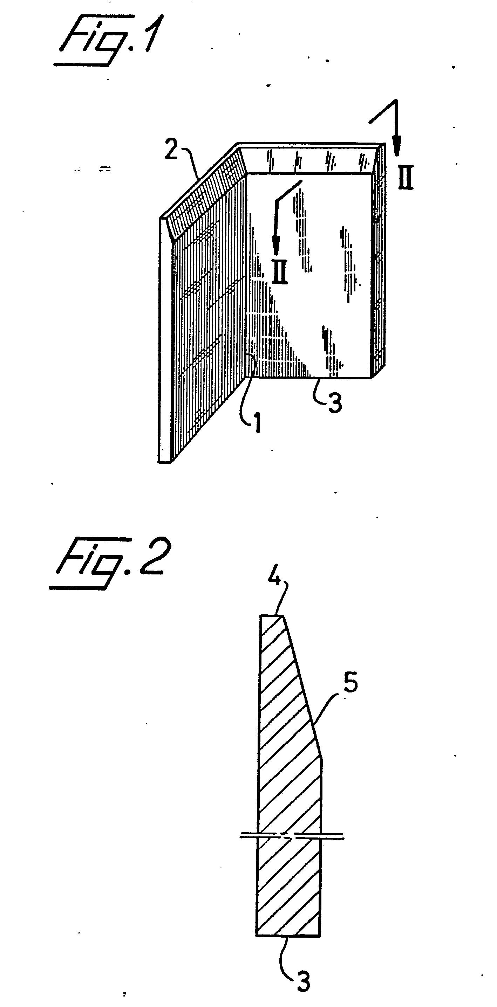

Ainsi qu'on peut le voir sur la figure 1, une agrafe selon la présente invention consiste en une lamelle métallique qui est pliée en deux au voisinage de sa partie médiane 1. L'angle de pliage est d'environ 90 degrés. Elle comporte deux bords horizontaux 2 et 3. Le bord horizontal 2 - partie de l'agrage qui entre la première dans le bois - comporte une partie plane 4 prolongée par une partie oblique 5, comme représenté sur la figure 2.

La partie plane 4 s'étend entre 1/6e et 17/30e de l'épaisseur de l'agrafe. Quant à la partie oblique 5, elle fait avec la verticale, c'est-à-dire avec les bords latéraux de la lamelle, un angle compris entre 11 et 16 degrés.

Lorsque l'agrafe consiste en une lamelle métallique qui est pliée en deux au voisinage de sa partie médiane et dont les bords verticaux sont repliés extérieurement en direction de l'axe de pliage, les meilleurs résultats ont été obtenus avec une partie plane s'étendant sur la moitié de l'épaisseur et une partie oblique faisant un angle de 12 degrés avec la verticale. Ceci est notamment valable pour une agrafe dont l'épaisseur est d'environ 3/10e de millimètre.

Quant à l'autre bord horizontal 3, il sert de face pour communiquer à l'agrafe la pression suffisante pour qu'elle pénètre dans le bois.

La largeur de la partie plane 4 ainsi que la valeur de l'angle de la partie oblique 5, ont été déterminés expérimentalement: au-delà et en deçà de ces valeurs, le comportement de l'agrafe, lorsque l'on veut l'enfoncer dans un bois réputé dur, n'est nullement satisfaisant. Par exemple, si cette largeur est trop importante, l'agrafe ne pénètre pas; par contre si elle est trop faible et l'angle trop aigu, l'agrafe se déchirera et/ou se tordra sans pénétrer complètement.

En outre il y a lieu de tenir compte du fait que l'agrafé est un élément métallique plié: il ne faut donc pas qu'après l'opération de pliage, on obtienne une pente inverse au niveau de l'axe de pliage.

Une telle agrafe pénètre en particulier dans les bois réputés durs tels que notamment le chêne américain et le chêne européen, mais également dans le bois plus tendre d'où son universalité.

Bien évidemment une telle agrafe peut comporter des bords latéraux qui sont repliés extérieurement en direction de l'axe de pliage, ainsi qu'éventuellement une protubérance sur toute sa largeur.

## Revendications

1.- Agrafe universelle consistant notamment en une lamelle pliée en deux au voisinage de sa partie médiane (1) dont le bord horizontal (2) qui entre le premier dans le matériau présente un biseau, caractérisée en ce que ledit bord (2) comporte une partie plane (4) qui s'étend entre 1/6e et 17/30e de l'épaisseur de ladite agrafe, prolongée par une partie oblique (5) faisant avec la verticale un angle compris entre 11 et 17 degrés.

2.- Agrafe selon la revendicaton 1, caractérisée en ce que ladite partie plane (4) s'étend sur la moitié de l'épaisseur de l'agrafe.

3.- Agrafe selon la revendication 1 ou 2, caractérisée en ce que ladite partie oblique (5) fait avec la verticale un angle de 12 degrés.

## Patentansprüche

1. Universelle Krampe, bestehend aus einer in der Nähe ihres mittleren Bereichs (1) umgefalteten Lamelle, deren horizontaler Rand (2), welcher zuerst in das Material eindringt, eine Abschrägung aufweist, dadurch gekennzeichnet, daß dieser Rand (2) einen geraden Abschnitt (4) aufweist, welcher sich über 1/6 bis 17/30 der Dicke dieser Krampe erstreckt und in einen schrägen Abschnitt (5) übergeht, welcher mit der Vertikalen einen Winkel zwischen 11 und 17 Grad bildet.

2. Krampe nach Anspruch 1, dadurch gekennzeichnet, daß dieser gerade Abschnitt (4) sich über die halbe Dicke der Krampe erstreckt.

3. Krampe nach Anspruch 1 oder 2, dadurch gekennzeichnet, daß dieser schräge Abschnitt (5) mit der Vertikalen einen Winkel von 12 Grad bildet.

## Claims

1. A universal staple comprising, more particularly, a strip folded in two near its central part (1), whose horizontal edge (2) which is the first to enter the material has a bevel, characterised in that the said edge (2) has a flat part (4) which extends between one-sixth and seventeen-thirtieths of the thickness of said staple, continued by an oblique part (5) forming an angle of between 11 and 17° with the vertical.

2. A staple according to claim 1, characterised in that the said flat part (4) extends over half the thickness of the staple.

3. A staple according to claim 1 or 2, characterised in that the said oblique part (5) forms an angle of 12° with the vertical.

_Fig.1_

_Fig.2_